# FASCICULE DE BREVET EUROPEEN

(11) **EP 1 196 787 B1**
(45) Date de publication et mention de la délivrance du brevet: **22.11.2006**
(21) Numéro de dépôt: 00953225.0
(22) Date de dépôt: 11.07.2000
(51) Int. Cl.: G01P 3/44, B60B 27/00

(54) **PALIER A ROULEMENT INSTRUMENTE**
WÄLZLAGER MIT MESSEINRICHTUNG
INSTRUMENTED BEARING

(30) Priorité: 23.07.1999 FR 9909610
(43) Date de publication de la demande: 17.04.2002
(73) Titulaire: SKF FRANCE, F-92140 Clamart (FR)
(72) Inventeur: MESSAGE, Olivier, F-37000 Tours (FR); LANDRIEVE, Franck, F-37230 Fondettes (FR)
(74) Mandataire: Casalonga, Axel
(86) Numéro de dépôt international: PCT/FR2000/001999
(87) Numéro de publication internationale: WO 2001/007922

(56) Documents cités:
- FR-A- 2 754 903
- US-A- 4 746 862
- US-A- 5 564 839
- US-A- 5 757 084

## Description

La présente invention concerne le domaine des paliers à roulement instrumentés munis d'un ensemble de détection des paramètres de rotation tels que la position angulaire, le sens de rotation, la vitesse, l'accélération.

De tels roulements instrumentés et de tels montages sont bien connus, notamment par le document FR 2 754 903. Ces roulements instrumentés peuvent être utilisés, par exemple, pour le pilotage de moteurs électriques de type synchrone.

L'ensemble de détection constitué par un bloc capteur et un élément codeur fournit alors au système d'asservissement du moteur toutes les informations utiles, en particulier la vitesse de rotation et la position des pôles du rotor par rapport à ceux du stator.

On peut équiper le rotor d'un codeur délivrant des impulsions et le stator d'un capteur fixe susceptible de détecter ces impulsions et d'en déduire des informations relatives au déplacement et à la position angulaire du rotor par rapport au stator. Dans les montages conventionnels, le système capteur-codeur est indépendant des paliers à roulement grâce auquel le rotor tourne dans le stator concentriquement à ce dernier.

De manière connue en soi, le codeur peut être de type magnétique et se présenter sous la forme d'une bague multipolaire dont le nombre de pôles dépend du nombre de pôles du moteur à piloter. Le codeur peut coopérer avec un capteur de type magnéto sensible, sonde à effet Hall par exemple, délivrant une tension de sortie variant à chaque changement de polarité de la bague du codeur et délivrant ainsi un signal caractéristique de type carré.

Si on veut connaître la position des pôles du rotor par rapport à ceux du stator au moyen du roulement instrumenté, on comprendra qu'il faut, lors du montage du rotor dans le stator, que :
- le capteur soit orienté angulairement par rapport aux pôles du stator,
- le codeur soit orienté angulairement par rapport au capteur,
- le codeur soit orienté angulairement par rapport aux pôles du rotor.

Ces opérations sont relativement délicates à réaliser dans la mesure où elles doivent être effectuées simultanément durant le montage du rotor dans le stator.

L'invention propose un dispositif de palier à roulement instrumenté disposé à la place d'un des deux paliers à roulement, évitant ainsi le montage d'un ensemble capteur-codeur séparé dans le moteur, le dispositif de palier à roulement étant pré-indexé de façon à supprimer l'opération d'indexation du codeur par rapport au capteur lors du montage du moteur.

Le dispositif de palier à roulement instrumenté, selon un aspect de l'invention, est du type comprenant une bague extérieure, une bague intérieure, au moins une rangée d'éléments roulants disposés entre un chemin de roulement de la bague extérieure et un chemin de roulement de la bague intérieure, et un ensemble de détection des paramètres de rotation comprenant un bloc capteur solidaire de la bague non tournante et supportant un élément capteur et un organe codeur tournant formant avec la bague tournante une partie tournante, l'organe codeur comprenant une partie active défilant à rotation devant l'élément capteur, le bloc capteur et la bague non tournante formant une partie fixe. La partie tournante comprend un moyen d'indexation extérieur à la partie active de l'organe codeur et apte à positionner angulairement ladite partie tournante par rapport à une référence de la partie fixe dans une position où le codeur génère dans le capteur un signal de référence.

On entend ici extérieur au sens de distinct.

Ainsi, le constructeur de moteurs n'a plus à se soucier que de l'orientation angulaire du rotor par rapport au stator, toutes les autres indexations angulaires étant réalisées par des moyens mécaniques directs.

Dans un mode de réalisation de l'invention, le moyen d'indexation est supporté par une pièce intermédiaire solidaire de la partie tournante.

Avantageusement, la pièce intermédiaire est un manchon solidaire de la bague tournante.

Dans un mode de réalisation de l'invention, le manchon est démontable de la bague tournante.

Dans un autre mode de réalisation de l'invention, le moyen d'indexation est aménagé directement sur la bague tournante, ou sur l'organe codeur.

Avantageusement, le moyen d'indexation est constitué par une protubérance, une rainure, une encoche ou un repère optique.

Dans un mode de réalisation de l'invention, un terminal de sortie de fils du bloc capteur comprend la référence de la partie fixe servant au positionnement angulaire du moyen d'indexation de la partie tournante.

Dans un mode de réalisation de l'invention, le moyen d'indexation et un terminal de sortie de fils du bloc capteur sont alignés lorsque le codeur délivre dans le capteur le signal de référence.

De préférence, le codeur, par exemple son support annulaire, est pourvu d'un moyen d'indexation angulaire apte à coopérer avec un outil de fabrication, tel qu'un moule. Le moyen d'indexation peut être une encoche.

Dans un mode de réalisation de l'invention, le moyen d'indexation forme également un moyen de référence lors de la réalisation de la partie active du codeur.

La présente invention propose également un procédé de pré-indexation d'un dispositif tel que décrit ci dessus, procédé dans lequel on fait tourner la partie tournante jusqu'à ce que le signal de référence soit délivré, on immobilise les deux parties, tournante et fixe, dans cette position angulaire relative, et on dispose sur la partie tournante un moyen d'indexation dans une position angulaire donnée par rapport à une référence de la partie fixe.

Dans le cas d'un roulement instrumenté monté dans un moteur synchrone, une indexation angulaire précise du capteur par rapport à un élément du carter dont la position angulaire par rapport au stator est connue, permet, si le codeur est lui-même indexé par rapport à l'arbre et aux pôles du rotor, de connaître la position angulaire du rotor par rapport au stator et donc la position relative des pôles. L'ensemble capteur-codeur peut en outre délivrer les informations relatives à la vitesse et à l'accélération du rotor.

L'invention propose également un procédé dans lequel on positionne angulairement le support de codeur dans un moule et on magnétise la partie active pendant le surmoulage de cette dernière.

Alternativement, on peut aussi positionner angulairement le codeur par rapport à un système de magnétisation, puis magnétiser la partie active. Dans les deux cas, les pôles seront toujours disposés de façon reproductible par rapport à un moyen d'indexation.

La présente invention sera mieux comprise et d'autres avantages apparaîtront à la lecture de la description détaillée de quelques modes de réalisation pris à titre d'exemples nullement limitatifs et illustrés par les dessins annexés, sur lesquels :
- la figure 1 est une vue en coupe axiale d'un palier à roulement instrumenté selon un premier mode de réalisation de l'invention;
- la figure 2 est une vue de face en élévation du palier à roulement de la figure 1;
- la figure 3 est une courbe montrant la forme du signal généré par le capteur (voltage V en fonction du déplacement angulaire α) et la partie du signal prise comme signal de référence;
- les figures 4 à 6 sont des vues partielles de face en élévation de paliers à roulement instrumenté selon trois autres modes de réalisation de l'invention;
- la figure 7 est une vue de face en élévation d'un codeur; et
- les figures 8 à 10 sont des vues en coupe axiale du palier à roulement selon le premier mode de réalisation de l'invention montrant des étapes du montage.

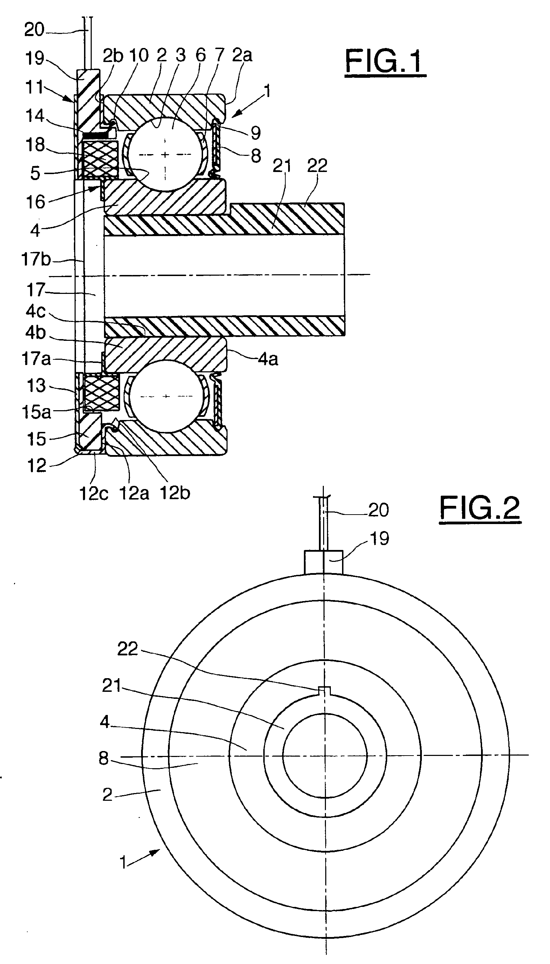

Comme on le voit sur les figures 1, 2 et 8 à 10, un roulement 1 comprend une bague extérieure 2 pourvue d'un chemin de roulement 3, une bague intérieure 4 pourvue d'un chemin de roulement 5, une rangée d'éléments roulants 6, ici des billes, disposés entre les chemins de roulement 3 et 5, une cage 7 de maintien de l'espacement circonférentiel des éléments roulants 6 et un joint d'étanchéité 8 monté sur la bague extérieure 2 et venant en frottement avec une portée de la bague intérieure 4 tout en étant disposé radialement entre lesdites deux bagues 2, 4 et axialement entre la rangée d'éléments roulants 6 et l'une des surfaces latérales desdites bagues 2, 4. Le joint d'étanchéité 8 est monté dans une rainure 9 formée dans la bague extérieure 2 à proximité de sa surface latérale radiale 2a.

Du côté opposé, la bague extérieure 2 est également pourvue d'une rainure 10 symétrique à la rainure 9 par rapport à un plan passant par le centre des éléments roulants 6. Un bloc-capteur référencé 11 dans son ensemble est monté sur la bague extérieure 2 du côté de la rainure 10. Le bloc-capteur 11 comprend un support métallique 12, une paroi métallique 13, et un élément-capteur 14 noyé dans une partie centrale en matériau synthétique 15.

Le support métallique 12 de forme générale annulaire comprend une paroi radiale en contact avec la surface radiale 2b de la bague extérieure 2 située du côté de la rainure 10 et se prolongeant sur son bord interne par un rebord 12b qui est replié dans la rainure 10 et assure l'accrochage du support 12 sur la bague extérieure 2. Le support métallique 12 comprend également une partie cylindrique 12c s'étendant à partir du bord externe de la partie radiale 12a axialement à l'opposé du roulement et se terminant par un rebord légèrement plié à l'oblique vers l'intérieur.

La paroi métallique 13 se présente sous la forme d'un disque dont le bord externe est sensiblement de même diamètre que le diamètre extérieur de la bague extérieure 2 et dont le bord interne est sensiblement de même diamètre que le diamètre extérieur de la bague intérieure 4. La paroi 13 forme l'enveloppe du bloc-capteur 11 du côté opposé au roulement 1 et le protège contre de possibles chocs ou autres agressions mécaniques. La paroi 13 est limitée dans son mouvement axial dans un sens à l'opposé du roulement 1 par le rebord d'extrémité plié à l'oblique de la partie cylindrique 12c et dans l'autre sens en direction du roulement 1 par la partie centrale 15 qui est disposée axialement entre la partie radiale 12a et la paroi 13.

La partie centrale 15 est limitée radialement par la partie cylindrique 12c vers l'extérieur et présente un alésage 15a de diamètre supérieur à celui du cercle fictif défini par les centres des éléments roulants 6 de façon qu'un espace radial suffisant reste libre pour le codeur qui sera expliqué plus loin. L'élément capteur 14 qui est solidaire de la partie centrale 15 affleure l'alésage 15a. La partie centrale 15 comprend un terminal 19 de sortie de fil 20 en saillie radiale par rapport à la partie cylindrique 12c par une ouverture formée dans cette dernière. Le terminal 19 s'étend radialement au-delà de la surface extérieure de la bague extérieure 2.

Un codeur 16 comprend un support 17 annulaire à section en T avec une branche radiale 17a en contact avec une surface radiale 4b de la bague intérieure 4 située dans le même plan que la surface radiale 2b de la bague extérieure 2, et une branche cylindrique 17b s'étendant à partir du bord extérieur de la branche radiale 17a, en étant partiellement emmanchée sur une portée cylindrique extérieure de la bague intérieure 4, adjacente à la surface radiale 4b. La branche cylindrique 17b fait partiellement saillie axialement en-dehors du roulement 1, plus précisément au-delà du plan des surfaces 2b et 4b.

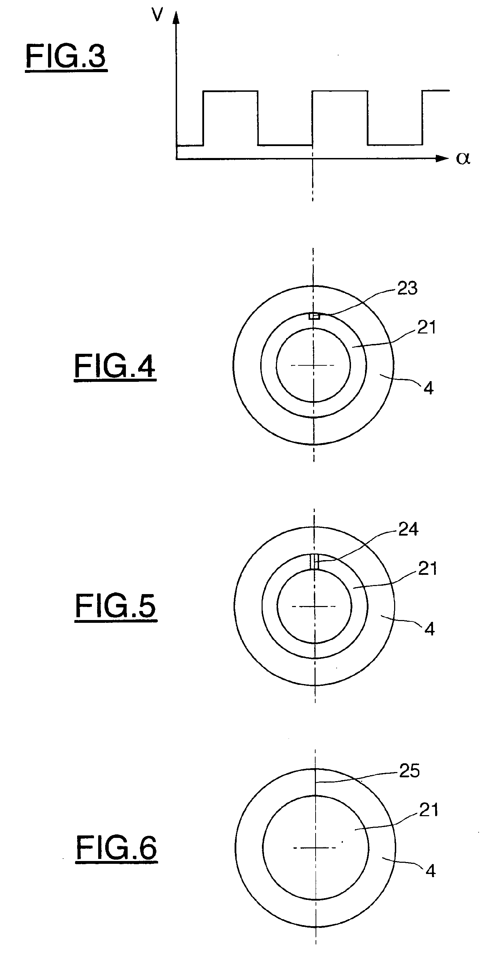

Le codeur 16 comprend encore une partie active 18 de forme annulaire de section généralement rectangulaire disposée sur le pourtour extérieur de la branche cylindrique 17b et s'étendant jusqu'à proximité de l'alésage 15a de la partie centrale 15 avec lequel elle forme un entrefer radial. Un passage étroit garantissant l'étanchéité du roulement est formé entre la paroi radiale extérieure de la partie active 18 et une portion de faible épaisseur de la partie centrale 15 qui se prolonge le long de la paroi 13 définissant ainsi un passage étroit radial. Lors de la rotation de la bague intérieure 4 par rapport à la bague extérieure 2, la partie active 18 du codeur 16 définit à rotation devant l'élément capteur 14 qui est capable de fournir en sortie un signal électrique qui peut avoir la forme de la courbe illustrée sur la figure 3. En effet, la partie active 18 du codeur 16 est une bague magnétisée multipolaire. On choisira le nombre de pôles de la partie active 18 comme un multiple du nombre de pôles du moteur dans lequel le roulement 1 est destiné à être monté.

Un manchon 21 de forme générale tubulaire est emmanché dans l'alésage 4c de la bague intérieure 4. Le manchon 21 est de longueur supérieure à celle de la bague intérieure 4 dans le sens axial et présente sur la partie de sa surface extérieure qui n'est pas disposée à l'intérieur de la bague intérieure 4 une protubérance radiale 22 s'étendant parallèlement à l'axe du roulement et formant un index permettant un repérage angulaire du manchon et par conséquent de la partie tournante formée de la bague intérieure 4 dans lequel il est emmanché et du codeur 16. Cet index mécanique est utilisé pour réaliser la préindexation du codeur 16 par rapport au capteur 14. Il suffit pour cela de chercher la position angulaire relative de la bague intérieure tournante par rapport à la bague extérieure 2 qui correspond à un signal de référence, par exemple un front de montée du signal comme cela est montré par la flèche de la figure 3 que l'on cherchera à faire correspondre ensuite à des positions angulaires relatives caractéristiques du rotor par rapport au stator, par exemple les pôles du rotor en face des pôles du stator.

Quand cette position est atteinte, on maintient les bagues 2, 4 du roulement dans ladite position angulaire relative et on emmanche le manchon 21 dans l'alésage du roulement avec serrage de telle sorte que l'index mécanique du manchon 21 soit angulairement aligné sur le terminal 19 de sortie de fil du capteur qui constitue la référence de la partie fixe du dispositif qui est formée par la bague extérieure 2 et le bloc-capteur 11. Une fois que le manchon 20 est mis en place, on peut sans inconvénient faire tourner la bague intérieure 4 car on est sûr de retrouver ultérieurement la position angulaire relative des bagues 2 et 4 correspondant à l'émission du signal de référence en alignant angulairement la protubérance 21 formant index et le terminal 19 de sortie de fil 20. Le dispositif de roulement instrumenté peut ainsi être transporté et manipulé en toute sécurité.

On peut bien sûr prévoir d'autres types d'index mécaniques tels qu'une rainure axiale 23 aménagée sur la périphérie d'un manchon 21 et s'étendant sur toute la longueur de ce dernier, voir le mode de réalisation illustré sur la figure 4, ou bien encore une encoche 24 formée sur l'extrémité du manchon 21, voir le mode de réalisation illustré sur la figure 5. On pourrait également envisager un index mécanique ou optique disposé sur la bague tournante du roulement ou bien encore sur le codeur annulaire. Le mode de réalisation de la figure 6 montre un index optique formé par un trait radial 25 marqué sur la face de la bague intérieure tournante 4 du roulement 1.

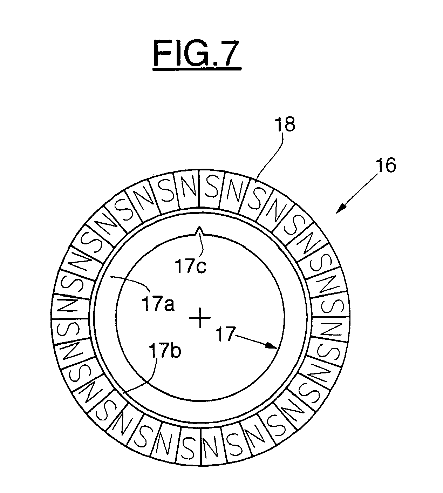

La figure 7 montre un mode de réalisation dans lequel la partie active 18 du codeur est constituée par un anneau multipolaire en plasto-ferrite, ledit anneau étant supporté par un support annulaire 17 de forme générale similaire à celui de la figure 1. L'index est constitué par une encoche 17c aménagée sur le bord intérieur de la portion radiale 17a du support.

Avantageusement, cette encoche pourra servir également de référence pour la magnétisation des pôles. C'est ainsi que si on magnétise les pôles de la partie active de l'anneau en plasto-ferrite durant le surmoulage de ladite partie active sur le support (magnétisation dans le moule), le support annulaire 17 du codeur est positionné angulairement dans le moule en utilisant l'index 17c, de telle sorte que la magnétisation des pôles s'effectue toujours de la même façon par rapport audit index de référence du support annulaire, c'est-à-dire que les pôles soient toujours disposés angulairement de la même façon par rapport à l'index de référence.

Il en est de même si la magnétisation est effectuée après l'opération de surmoulage. Dans ce cas également, l'encoche formant index peut servir utilement à placer le support annulaire dans le dispositif de magnétisation de telle sorte que sur tous les codeurs ainsi réalisés, les pôles soient toujours disposés angulairement de la même façon par rapport à l'index de référence.

De la même façon, dans le cas d'un codeur annulaire optique dont la partie active comprend une pluralité de graduations destinées à générer des variations d'intensité d'un faisceau lumineux à destination d'un capteur, on pourrait envisager que ce soit le même index qui serve à la fois de référence pour la réalisation des graduations et comme moyen d'indexation du codeur dans le palier à roulement.

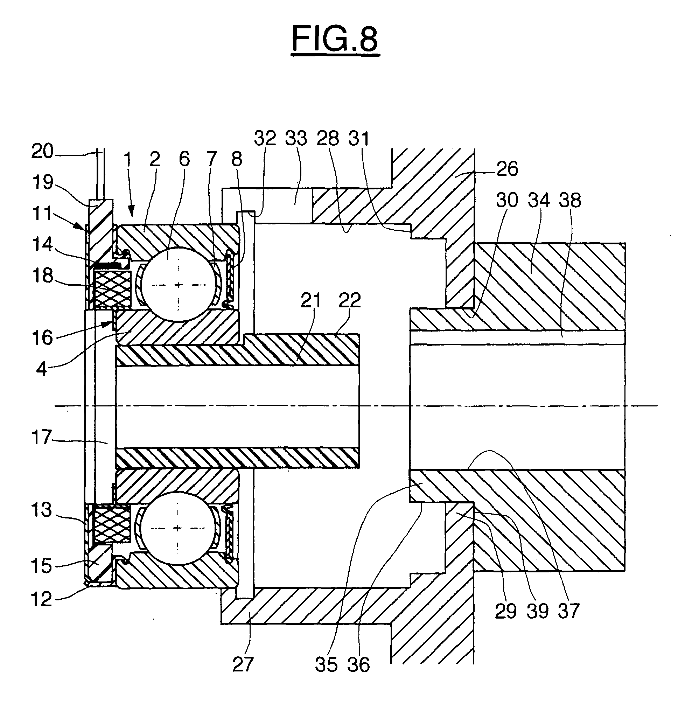

Le montage du palier à roulement instrumenté dans un moteur électrique est illustré, à titre d'exemple, par les figures 8 à 10.

Dans une première étape, illustrée sur la figure 8, le roulement 1 pourvu de son manchon 21, est présenté à l'entrée d'un carter moteur 26 comprenant une partie cylindrique 27 pourvue d'un alésage 28, et d'une partie radiale 29 en forme de disque pourvue d'un alésage 30 et obturant partiellement l'espace intérieur formé par l'alésage 28, les alésages 28 et 30 étant coaxiaux. Un épaulement 31 est formé sur l'alésage 28 à proximité de la partie radiale 29. La partie radiale 29 est disposée à l'extrémité axiale de la partie cylindrique 27 dont l'autre extrémité est ouverte et comporte une rainure annulaire 32 s'étendant vers l'extérieur à partir de l'alésage 28 sur une partie de l'épaisseur de la partie cylindrique 27. Une encoche 33 est formée à travers toute l'épaisseur de la partie cylindrique 27 et s'étend axialement entre ladite extrémité opposée à la partie radiale 29 jusqu'au-delà de la rainure 32.

Un outil d'indexation 34 comprend une protubérance axiale 35 de forme générale cylindrique pourvue d'une surface extérieure 36 de diamètre adapté pour emmanchement dans l'alésage 30 de la partie radiale 29 du carter 26, et un alésage 37 de diamètre identique à l'alésage 4c de la bague intérieure 4 du roulement 1. Dans l'alésage 37, est formée une rainure axiale 38 de dimensions adaptées pour la protubérance 22 du manchon 21. L'outil d'indexation 34 comprend une surface radiale 39 s'étendant vers l'extérieur à partir de la protubérance 35 et apte à venir en contact de butée avec une surface de la partie radiale 29 du côté opposé à la partie cylindrique 27. L'outil d'indexation 34 est ainsi emmanché dans l'alésage 30, sa protubérance 35 faisant partiellement saillie axialement au-delà de la partie radiale 29 sensiblement jusqu'au niveau de l'épaulement 31.

Lors de l'emmanchement de l'outil d'indexation 34 dans le carter moteur 26, on aligne angulairement la rainure 38 de l'outil d'indexation 34 et l'encoche 33 du carter moteur 26. Puis, on présente le roulement 1 du côté ouvert de l'alésage 28 avec le manchon 21 en saillie axiale vers l'outil d'indexation 34. Par un mouvement axial, on insère le roulement 1 dans l'alésage 28, avec le terminal de sortie de fil 19 qui est en saillie radiale par rapport au roulement 1 disposé dans l'encoche 33. Dans le même temps, l'extrémité du manchon 21 qui est en saillie axiale par rapport au roulement, entre dans l'alésage 37 de l'outil d'indexation 34 avec la protubérance 22 en saillie dans la rainure 38.

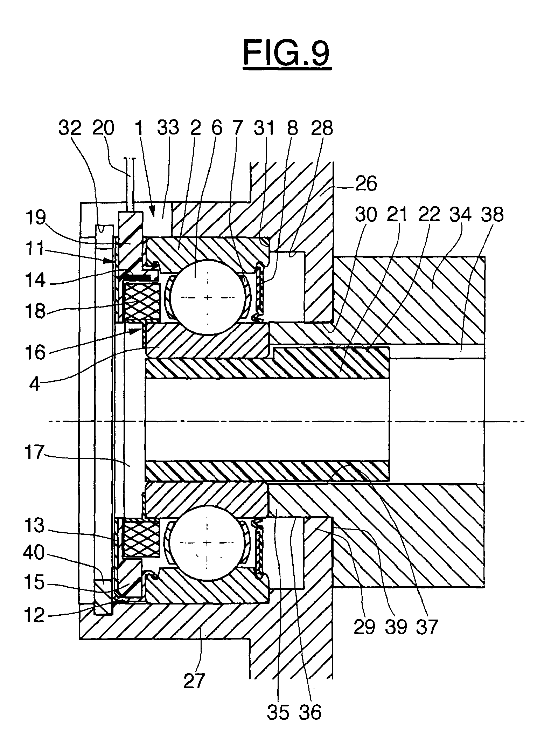

A la fin du mouvement axial du roulement 1, on se trouve dans la position illustrée sur la figure 9 avec la surface radiale 2a de la bague extérieure 2 du roulement 1 en contact de butée avec l'épaulement 31, et la surface radiale 4a de la bague intérieure 4 en contact avec l'extrémité libre de la protubérance axiale 35 de l'outil d'indexation 34. Bien entendu, si les dimensions axiales des bagues extérieure 2 et intérieure 4 étaient différentes et par conséquent les surfaces radiales 2a et 4a situées dans des plans différents, on prévoirait un épaulement 31 et une extrémité de la protubérance axiale 35 disposés également dans des plans différents. Un anneau élastique 40, par exemple du genre circlips, est disposé dans la rainure 32 et empêche tout mouvement axial inverse du roulement 1. L'anneau élastique 40 est en contact axial avec la paroi 13 du bloc-capteur 11. Ainsi, la partie non tournante du roulement 1, à savoir la bague extérieure 2 et l'élément codeur 11, sont indexés angulairement par rapport au carter moteur 26 grâce à la coopération du terminal de sortie de fil 19 et de l'encoche 33.

Le carter 26 et l'outil d'indexation 34 sont indexés angulairement par alignement angulaire de la rainure 38 sur l'encoche 33 lors de l'emmanchement. Le manchon 21 est indexé angulairement par rapport à l'outil d'indexation 34 par la coopération de la protubérance 22 et de la rainure 38 et la partie tournante du roulement 1 formé par la bague intérieure 4 et le codeur 18 est indexée angulairement par rapport au manchon 21 lors de l'emmanchement dudit manchon. Comme on connaît la position angulaire relative du carter 26 par rapport au stator 41 du moteur électrique, on a ainsi indexé le capteur et le codeur par rapport aux pôles 42.

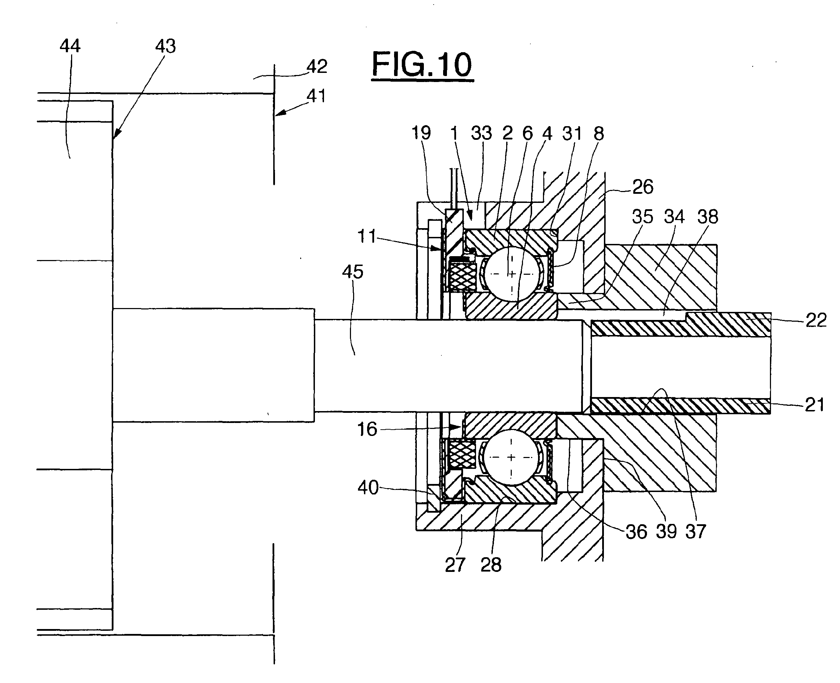

Le moteur électrique comporte également un rotor 43 comprenant des pôles 44 et un arbre 45 que l'on vient emmancher par un mouvement axial dans l'alésage 4c de la bague intérieure 4 du roulement 1. L'arbre 45 repousse alors axialement le manchon 21 vers l'extérieur, en d'autres termes du côté de l'outil d'indexation 34. Tout au long du mouvement d'emmanchement de l'arbre 45, le manchon 21 continue d'assurer l'indexation au positionnement angulaire, la protubérance 22 coulissant axialement dans la rainure 38. En fin de mouvement, le manchon 21 n'est plus en contact avec la bague intérieure 4 et on procède au retrait du manchon 21 et de l'outil d'indexation 34 qui peuvent alors être réutilisés, voir figure 10.

Ainsi, on réalise un positionnement angulaire précis entre le rotor 43 et le stator 41. On commence par indexer angulairement les parties tournantes et non tournantes du roulement 1 en recherchant une position relative qui corresponde à un signal de référence. On emmanche alors le manchon en faisant correspondre les positions angulaires de son index mécanique et du terminal de sortie de fils du capteur. On monte alors le roulement pourvu de son manchon dans le carter pourvu de l'outil d'indexation avec le terminal de sortie de fils venant faire saillie dans l'encoche du carter et l'index du manchon venant coopérer avec un moyen correspondant de l'outil d'indexation. Puis, on monte le rotor du moteur en chassant progressivement le manchon 21 par translation à l'intérieur de l'outil d'indexation et on retire le manchon et l'outil d'indexation. Comme les pôles du rotor ont été préalablement orientés par rapport à ceux du stator, on a ainsi réalisé toute la chaîne d'indexation. Au signal de référence généré par le roulement instrumenté, correspondra une position angulaire connue des pôles du rotor par rapport à ceux du stator. Ici, le signal de référence se produira lorsque les pôles du rotor seront en face de ceux du stator.

Grâce à l'invention, le constructeur de moteurs électriques n'a plus à se soucier que de l'orientation angulaire du stator par rapport au rotor, toutes les autres indexations angulaires étant réalisées par des moyens mécaniques directs.

Cet exemple de réalisation s'applique par exemple à un moteur électrique, notamment de type synchrone, mais il n'est nullement limitatif. Les moyens d'indexation que l'on a exposés peuvent s'appliquer à des paliers à roulement destinés à des applications variées et dans lesquelles on cherche à connaître non seulement la vitesse de rotation d'une partie tournante par rapport à une partie fixe, mais également sa position angulaire précise.

## Revendications

1. Dispositif de palier à roulement instrumenté (1), du type comprenant une bague extérieure (2), une bague intérieure (4), au moins une rangée d'éléments roulants (6) disposés entre un chemin de roulement de la bague extérieure et un chemin de roulement de la bague intérieure, et un ensemble de détection des paramètres de rotation comprenant un bloc capteur (11) solidaire de la bague non tournante et supportant un élément capteur (14), et un organe codeur (16) tournant formant avec la bague tournante une partie tournante, l'organe codeur comprenant une partie active défilant à rotation devant l'élément capteur, le bloc capteur et la bague non tournante formant une partie fixe, **caractérisé par le fait que** la partie tournante comprend un moyen d'indexation (22,23,17c,24,25) extérieur à la partie active de l'organe codeur et apte à positionner angulairement ladite partie tournante par rapport à une référence de la partie fixe dans une position où le codeur génère dans l'élément capteur un signal de référence.

2. Dispositif selon la revendication 1, **caractérisé en ce que** le moyen d'indexation est supporté par une pièce intermédiaire solidaire de la partie tournante.

3. Dispositif selon la revendication 2, **caractérisé par le fait que** la pièce intermédiaire est un manchon (21) solidaire de la bague tournante.

4. Dispositif selon la revendication 3, **caractérisé par le fait que** le manchon est démontable de la bague tournante.

5. Dispositif selon la revendication 1, **caractérisé par le fait que** le moyen d'indexation est aménagé directement sur la bague tournante.

6. Dispositif selon la revendication 1, **caractérisé par le fait que** le moyen d'indexation est aménagé directement sur l'organe codeur.

7. Dispositif selon l'une quelconque des revendications précédentes, **caractérisé par le fait que** le moyen d'indexation est constitué par une protubérance (22), une rainure (23), une encoche (17c, 24) ou un repère optique (25).

8. Dispositif selon l'une quelconque des revendications précédentes, **caractérisé par le fait qu'**un terminal (19) de sortie de fils du bloc capteur comprend la référence de la partie fixe servant au positionnement angulaire du moyen d'indexation de la partie tournante.

9. Dispositif selon l'une quelconque des revendications précédentes, **caractérisé par le fait que** le moyen d'indexation et un terminal de sortie de fils du bloc capteur sont alignés lorsque le codeur délivre dans le capteur le signal de référence.

10. Dispositif selon l'une quelconque des revendications précédentes, **caractérisé par le fait que** le moyen d'indexation forme également un moyen de référence lors de la réalisation de la partie active du codeur.

11. Procédé de pré-indexation d'un dispositif selon l'une quelconque des revendications précédentes, **caractérisé par le fait qu'**on fait tourner la partie tournante jusqu'à ce que le signal de référence soit délivré, qu'on immobilise les deux parties, tournante et fixe, dans cette position angulaire relative, et qu'on dispose sur la partie tournante un moyen d'indexation dans une position angulaire donnée par rapport à une référence de la partie fixe.

## Claims

1. Instrumented rolling-bearing device (1), of the type comprising an outer ring (2), an inner ring (4), at least one row of rolling elements (6) which are arranged between a raceway of the outer ring and a raceway of the inner ring, and an assembly for detecting rotational parameters comprising a sensor unit (11) secured to the non-rotating ring and supporting a sensor element (14), and a rotary encoder member (16) forming, with the rotating ring, a rotating part, the encoder member comprising an active part rotating past the sensor element, the sensor unit and the non-rotating ring forming a stationary part, **characterized in that** the rotating part comprises an indexing means (22, 23, 17c, 24, 25) external to the active part of the encoder member and capable of angularly positioning said rotating part with respect to a reference of the stationary part in a position in which the encoder generates a reference signal in the sensor element.

2. Device according to Claim 1, **characterized in that** the indexing means is supported by an intermediate part secured to the rotating part.

3. Device according to Claim 2, **characterized in that** the intermediate part is a sleeve (21) secured to the rotating ring.

4. Device according to Claim 3, **characterized in that** the sleeve is removable from the rotating ring.

5. Device according to Claim 1, **characterized in that** the indexing means is formed directly on the rotating ring.

6. Device according to Claim 1, **characterized in that** the indexing means is formed directly on the encoder member.

7. Device according to any of the preceding claims, **characterized in that** the indexing means consists of a protrusion (22), a groove (23), a notch (17c, 24) or an optical mark (25).

8. Device according to any of the preceding claims, **characterized in that** a terminal (19) for leading wires out of the sensor unit comprises the reference of the stationary part used for the angular positioning of the means of indexing of the rotating part.

9. Device according to any of the preceding claims, **characterized in that** the indexing means and a terminal for leading wires out of the sensor unit are aligned when the encoder delivers the reference signal in the sensor.

10. Device according to any of the preceding claims, **characterized in that** the indexing means also forms a reference means when producing the active part of the encoder.

11. Method of pre-indexing a device according to any of the preceding claims, **characterized in that** the rotating part is rotated until the reference signal is delivered, **in that** the two parts, rotating and stationary, are immobilized in this relative angular position, and **in that** an indexing means is placed on the rotating part in a given angular position with respect to a reference of the stationary part.

## Patentansprüche

1. Instrumentierte Lageranordnung (1), zu der gehören: ein Außenring (2), ein Innenring (4), wenigstens ein zwischen einer Lagerlauffläche des Außenrings und einer Lagerlauffläche des Innenrings angeordneter Kranz von Wälzkörpern (6) und eine zum Erfassen von Rotationsparametern dienende Sensoranordnung mit einem Signalaufnehmer (11), der starr mit dem stillstehenden Ring verbunden ist und ein Aufnehmerelement (14) trägt, und einem rotierenden Impulsgeberelement (16), das mit dem umlaufenden Lagerring ein umlaufendes Teil bildet, wobei das Impulsgeberelement ein aktives Teil enthält, das während der Drehung vor dem Aufnehmerelement vorbeiläuft, und der Signalaufnehmer und der stillstehende Ring ein ortsfestes Teil bilden, **dadurch gekennzeichnet, dass** das umlaufende Teil ein Indexierungsmittel (22, 23, 17c, 24, 25) aufweist, das außerhalb des aktiven Teils des Impulsgeberelements angeordnet und in der Lage ist, das umlaufende Teil in Bezug auf einen Referenzpunkt des ortsfesten Teils in Umfangsrichtung an einer Stelle zu positionieren, an der der Impulsgeber in dem Aufnehmerelement ein Referenzsignal erzeugt.

2. Einrichtung nach Anspruch 1, **dadurch gekennzeichnet, dass** das Indexierungsmittel an einem Zwischenelement sitzt, das starr mit dem umlaufenden Teil verbunden ist.

3. Einrichtung nach Anspruch 2, **dadurch gekennzeichnet, dass** das Zwischenelement eine starr mit dem umlaufenden Lagerring verbundene Büchse (21) ist.

4. Einrichtung nach Anspruch 3, **dadurch gekennzeichnet, dass** die Büchse von dem umlaufenden Lagerring abnehmbar ist.

5. Einrichtung nach Anspruch 1, **dadurch gekennzeichnet, dass** das Indexierungsmittel unmittelbar auf dem umlaufenden Lagerring angeordnet ist.

6. Einrichtung nach Anspruch 1, **dadurch gekennzeichnet, dass** das Indexierungsmittel unmittelbar auf dem Impulsgeberelement angeordnet ist.

7. Einrichtung nach einem der vorhergehenden Ansprüche, **dadurch gekennzeichnet, dass** das Indexierungsmittel auf einem Vorsprung (22), einer Nut (23), einer Ausnehmung (17c, 24) oder einer optischen Markierung (25) basiert.

8. Einrichtung nach einem der vorhergehenden Ansprüche, **dadurch gekennzeichnet, dass** eine Kabelausgangsanschlussstelle (19) des Signalaufnehmers den Referenzpunkt des feststehenden Teils beinhaltet, der zur Positionierung des Indexierungsmittels des umlaufenden Teils in Umfangsrichtung dient.

9. Einrichtung nach einem der vorhergehenden Ansprüche, **dadurch gekennzeichnet, dass** das Indexierungsmittel und eine Kabelausgangsanschlussstelle des Signalaufnehmers fluchtend angeordnet sind, wenn der Impulsgeber das Referenzsignal an den Eingang des Aufnehmers ausgibt.

10. Einrichtung nach einem der vorhergehenden Ansprüche, **dadurch gekennzeichnet, dass** das Indexierungsmittel während der Herstellung des aktiven Teils des Impulsgebers außerdem ein Referenzmittel darstellt.

11. Verfahren zur Vorindexierung einer Vorrichtung nach einem der vorhergehenden Ansprüche, **dadurch gekennzeichnet, dass** zu dem Verfahren die Schritte gehören: das umlaufende Teil zu drehen, bis das Referenzsignal ausgegeben ist, die beiden Teile, d.h. das umlaufende und das stillstehende Teil, in dieser relativen Stellung in Umfangsrichtung zu fixieren, und ein Indexierungsmittel auf dem umlaufenden Teil in einer in Bezug auf einen Referenzpunkt des feststehenden Teils vorgegeben Winkelstellung anzuordnen.
